# EUROPÄISCHE PATENTSCHRIFT

(11) **EP 0 335 298 B1**
(45) Veröffentlichungstag und Bekanntmachung des Hinweises auf die Patenterteilung: **16.06.1993**
(21) Anmeldenummer: 89105361.3
(22) Anmeldetag: 25.03.1989
(51) Int. Cl.: B29C 45/18

(54) **Kunststoffwechseleinrichtung an einer Kunststoff-Spritzgiesseinheit**
Plastic changing apparatus for a plastic injection unit
Dispositif de changement de matière plastique pour une unité d'injection de matière plastique

(30) Priorität: 30.03.1988 DE 3810732
(43) Veröffentlichungstag der Anmeldung: 04.10.1989
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- DE-A- 3 605 219
- FR-A- 984 904
- FR-A- 1 251 751
- PATENT ABSTRACTS OF JAPAN, Band 9, Nr. 34 (M-357)[1757], 14. Februar 1985; & JP-A-59 178 232 (SUWA SEIKOSHA K.K.) 09-10-1984

## Beschreibung

Die Erfindung bezieht sich auf eine Wechseleinrichtung entsprechend dem Oberbegriff des Patentanspruchs 1.

Bei einer bekannten Wechseleinrichtung dieser Art (DE-OS 36 05 219) treibt eine motorisch rotierbare, axial festgelegte Kugelrollspindel die Verschiebeplatte an. Da die über diese Kugelrollspindel betätigte Verschiebeplatte stufenlos verfahrbar ist, sind aufwendige elektronische Einrichtungen (Wegmeßgeräte, Endschalter) erforderlich, um zu gewährleisten, daß bei Öffnung des Verschlußschiebers die Anschlußbohrungen der Verschiebeplatte lagegerecht über der Durchtrittsbohrung in der Anformung des Trägerblocks liegt.

Davon ausgehend liegt der Erfindung die Aufgabe zugrunde, eine Wechseleinrichtung der eingangs genannten Gattung derart weiterzubilden, daß die Positionierung der Verschiebeplatte mit wesentlich einfacheren Mitteln zu bewerkstelligen ist.
Diese Aufgabe wird durch die im Kennzeichen des Patentanspruchs 1 genannten Merkmale gelöst.

Bei einer solchen Ausbildung wird die Verschiebeeinrichtung auf rein hydraulischem Wege durch wechselnde Kombination der beiden Endstellungen (ausgefahren; nicht ausgefahren) von (n) Hydraulikzylindern derart betätigt, daß alle (n+1) Anschlußbohrungen ohne zusätzliche Hilfsmittel lagegerecht zur Durchtrittsbohrung ansteuerbar sind. Sind nur zwei Hydraulikzylinder vorhanden, so wird die eine Extremstellung der Verschiebeplatte erreicht, wenn beide Hydraulikzylinder ausgefahren sind und die andere Extremstellung, wenn beide Hydraulikzylinder nicht ausgefahren sind. Finden mehr als zwei Hydraulikzylinder Verwendung, so ist der eine endständige Hydraulikzylinder mit einem Ende axial an der Spritzgießeinheit abgestützt und der andere endständige Hydraulikzylinder mit einem Ende an der Verschiebeplatte befestigt. Dabei spielt es bei der Ausbildung keine Rolle, ob die Hydraulikzylinder in Reihe, gegenständig oder teils gegenständig, teils in Reihe angeordnet sind.

Bei einer Ausbildung nach den Patentansprüchen 5, 6 oder 7 ist zudem eine Verschiebebewegung von einer Extremstellung der Verschiebeplatte zur anderen Extremstellung der Verschiebeplatte möglich, ohne daß eine Vermischung der in den Vorratsbehältern vorhandenen verschiedenen Kunststoffe zu befürchten ist.
Nachstehend wird die Erfindung anhand der Zeichnung an einem Ausführungsbeispiel erläutert.

Es zeigen:
- Fig. 1: die Spritzgießeinheit mit erfindungsgemäßer Wechseleinrichtung in Seitenansicht,
- Fig. 2: die erfindungsgemäße Wechseleinrichtung in Stirnansicht,
- Fig. 3, 3a: Schnitte nach Linie III-III von Fig. 4 durch die Wechseleinrichtung in Mittelstellung und in einer Extremstellung und
- Fig. 4: einen Schnitt nach Linie IV-IV von Fig. 3 durch die Wechseleinrichtung.

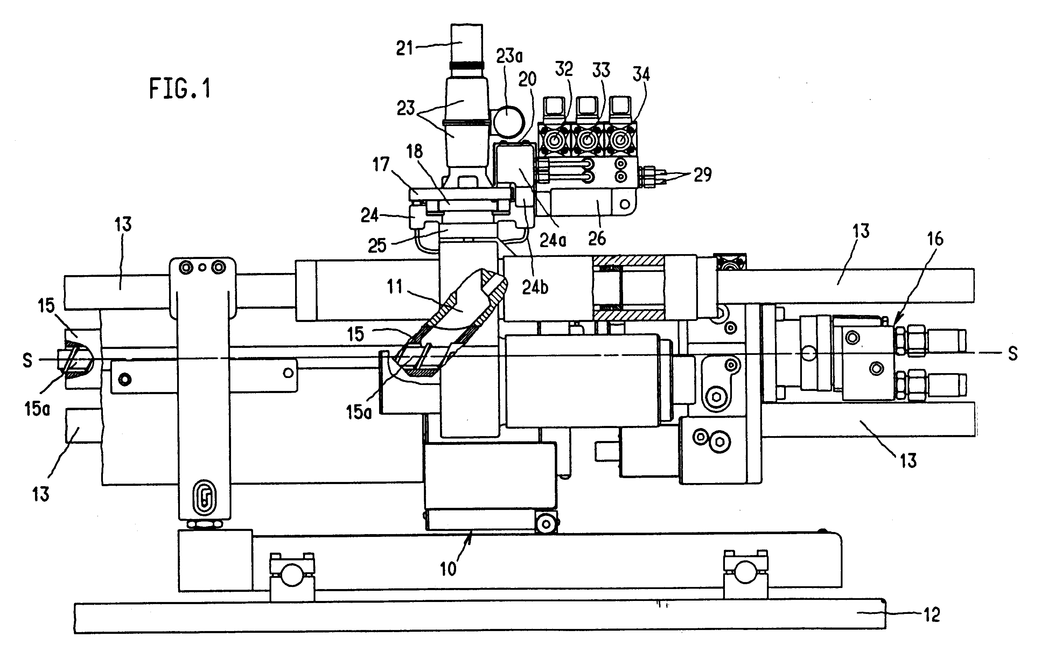

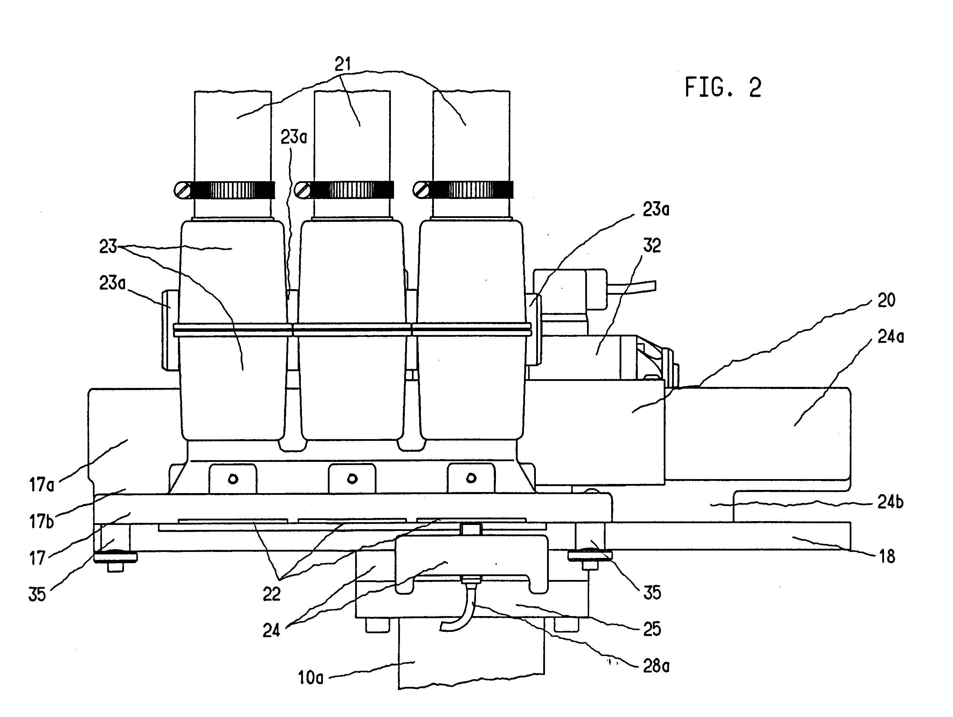

Wie insbesondere aus Fig. 1 ersichtlich, befindet sich die Wechseleinrichtung an einer horizontalen Spritzgießeinheit, deren Plastifizierzylinder 15 rückseitig in einem Trägerblock 10 aufgenommen ist, auf einem Maschinenfuß 12. Die Spritzgießeinheit ist auf Führungssäulen 13 axial verschiebbar gelagert. Mittels eines Rotationsmotors 16 wird die Plastifizierschnecke 15a des Plastifizierzylinders 15 angetrieben. Quer zur Spritzachse der Spritzgießeinheit erstreckt sich die über der Spritzgießeinheit an einer Ausformung des Trägerblocks angebrachte Führungsleiste 18 der Wechseleinrichtung, die eine Durchtrittsbohrung 18b aufweist, welche mit einem Zuführkanal 11 im Trägerblock 10 einen Transportkanal zum Plastifizierzylinder 15 bildet. Auf der Führungsleiste 18 ist die motorisch verfahrbare Verschiebeplatte 17 in Führungen 35 angeordnet, die mit über Schieber 22 absperrbaren, in Reihe angeordneten Anschlußbohrungen 17c,17c′,17c'' versehen ist, an die je ein Zuführschlauch 21 mittels eines Zuführrohres 21a zur wahlweisen Versorgung des Plastifizierzylinders 15 mit unterschiedlichen Kunststoffen lösbar angeschlossen ist, der aus außerhalb der Spritzgießeinheit angeordneten Vorratsbehältern speisbar ist. Die Verschiebeplatte 17 läßt sich mittels einer Verschiebeeinrichtung 19 derart schrittweise verschieben, daß sich diejenige der Anschlußbohrungen 17c,17c′,17c'' mit der Durchtrittsbohrung 18b deckt, an welche der Zuführschlauch 21 des momentan gewünschten Kunststoffes angeschlossen ist (Fig.2).

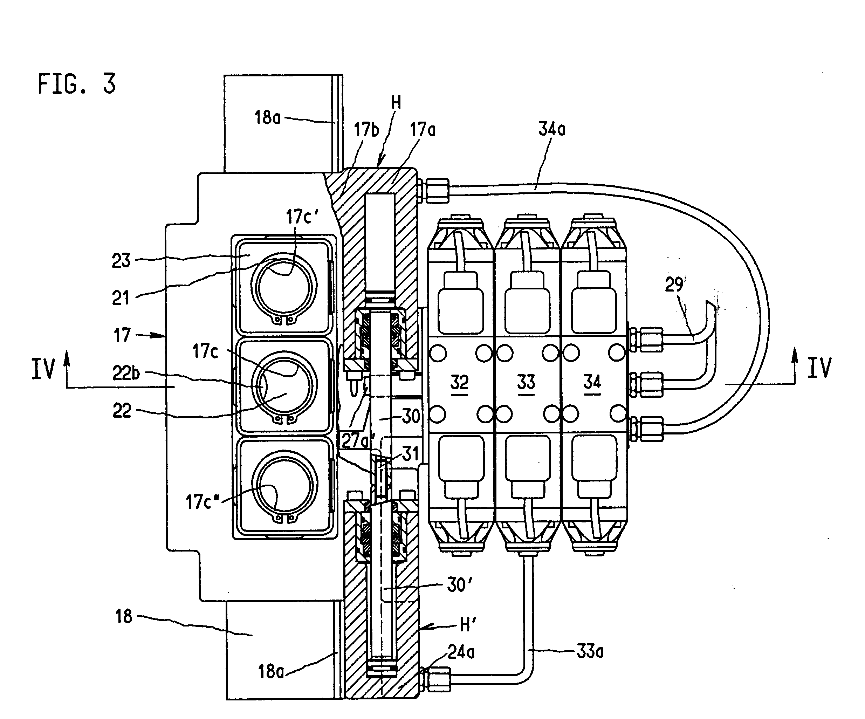

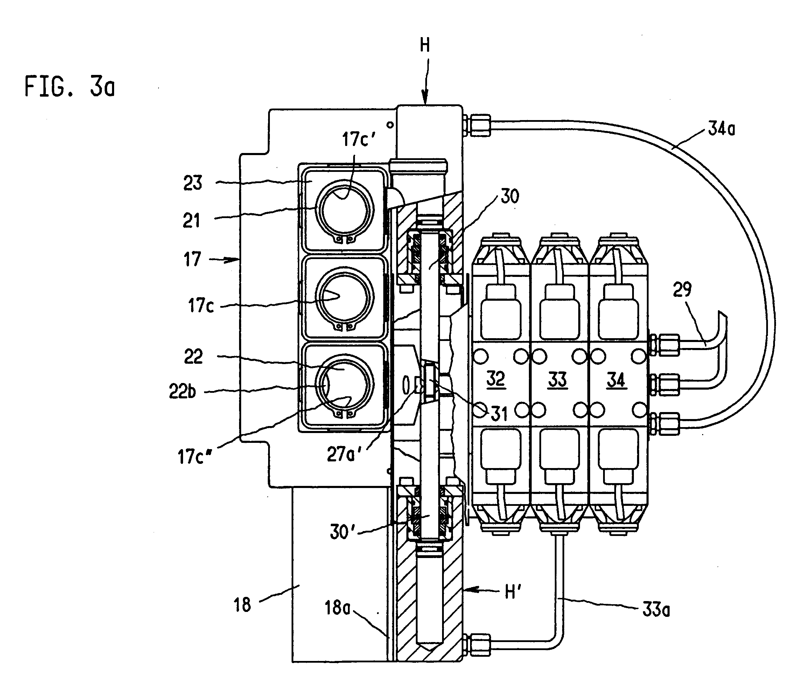

Die Verschiebeeinrichtung 19 besteht dabei aus zwei koaxial zu ihrer Verschieberichtung angeordneten Kolben-Zylinder-Einheiten H, H′ gleicher Hublänge. Dabei ist der eine eigentliche Zylinder 24a über ein Verbindungsstück 24b am Grundkörper 24 axial abgestützt, während der andere bewegliche Zylinder H mit seinem eigentlichen Zylinder 17a über einen Verbindungsbereich 17b an der Verschiebeplatte 17 befestigt ist und mit seiner Kolbenstange 30 mit der Kolbenstange 30′ des anderen Zylinders H′ mittels eines Verbindungsstückes 31 verbunden ist. Der eigentliche Zylinder 24a des stationären Antriebszylinders H′ bildet dabei eine Ausformung des durch ein Gußstück gebildeten Grundkörpers und der eigentliche Zylinder 17a des beweglichen Antriebszylinders H bildet eine Ausformung der ebenfalls durch ein Gußstück gebildeten Verschiebeplatte 17 (Fig. 3, 3a). Dabei sind durch wechselnde Kombination der beiden Endstellungen der Hydraulikzylinder H, H′ alle drei Anschlußbohrungen 17c, 17c′, 17c'' lagegerecht zur Durchtrittsbohrung 18b ansteuerbar. Aus Sicherheitsgründen ist die Antriebseinrichtung im mittleren Bereich durch eine Schutzabdeckung 20 abgedeckt. Zur rein hydraulischen Betätigung der Antriebseinrichtung 19 befinden sich in einem Hydraulikblock 26 drei Schaltventile 32, 33, 34 an der Wechseleinrichtung, die über die Hydraulikanschlüsse 29 mit Hydrauliköl versorgt werden. Die Schaltventile 33, 34 steuern über die hydraulischen Verbindungsleitungen 33a, 34a die beiden Zylinder H′, H (Fig. 3, 3a). Das Schaltventil 32 steuert die Kolben-Zylinder-Einheit 27.

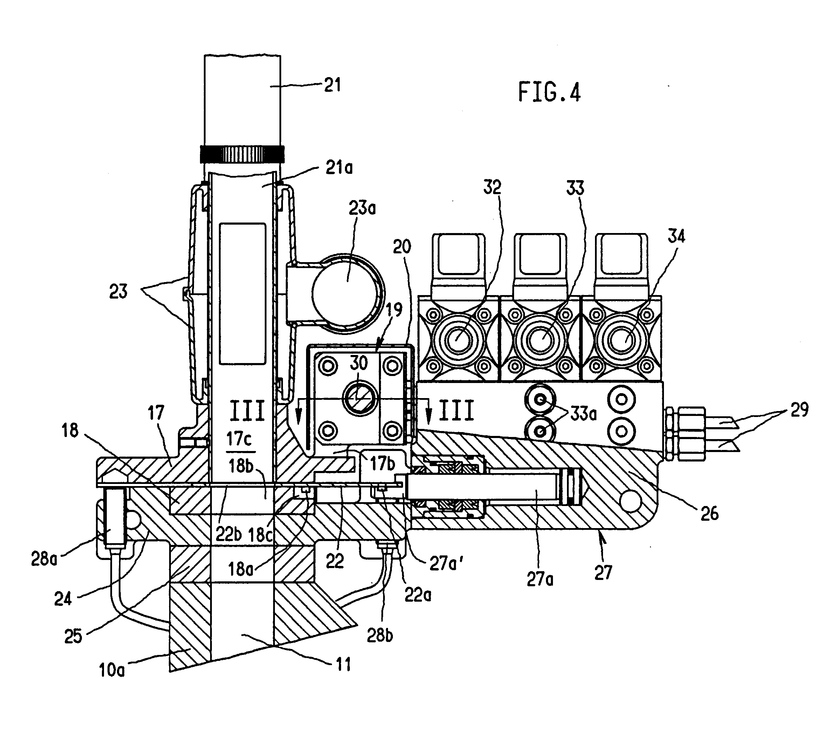

Aus Fig. 4 in Verbindung mit Fig. 3 ist ersichtlich, wie der Schieber 22 betätigt wird. Mit der Kolbenstange 27a der etwa symmetrisch zur Spritzachse s-s der Spritzgießeinheit liegenden Kolben-Zylinder-Einheit 27 wird im Kupplungsbereich 27a′ eine Mitnehmernase 22a des Schiebers derart hintergriffen, daß durch Einfahren der Kolbenstange der Schieber aus seiner Abdeckposition herausziehbar ist und eine Öffnung 22b im Schieber freigibt, wenn sich eine der Anschlußbohrungen 17c,17c′, 17c'' und die Durchtrittsbohrungen 18b decken. Ein Verfahren mittels der Verschiebeeinrichtung 19 ist nur möglich, wenn alle Schieber 22 geschlossen und abgekuppelt sind. Stationäre induktive Endschalter 28a, 28b sorgen dafür, daß sowohl bei unvollständiger Absperrposition als auch bei Offenstellung des aktuellen Schiebers 22 die Antriebseinrichtung 19 inaktiviert ist. Während der Verschiebebewegung der Verschiebeplatte 17 ist eine Bewegung der Schieber 22 in ihre oder aus ihrer Absperrposition prinzipiell unmöglich.

Wie aus Fig. 4 in Verbindung mit Fig. 2 ersichtlich, mündet der Zuführschlauch 21 in ein Zuführrohr 21a, das mit einer Schutzeinrichtung 23 versehen ist. Auf der einen Seite dieser Schutzeinrichtung erstreckt sich horizontal ein Luftkanal 23a mit Anschlußstutzen für alle drei Schutzeinrichtungen 23, über den alle anfallenden Staubteile abgesaugt werden können, um unzulässige Staubkonzentrationen am Arbeitsplatz zu vermeiden. Die ganze Wechseleinrichtung ist mit ihrem Grundkörper 24 über einen Zwischenflansch 25 lösbar mit einer Ausformung 10a des Trägerblocks 10 verbunden (Fig. 2).

## Patentansprüche

1. Kunststoffwechseleinrichtung (Wechseleinrichtung) an einer horizontalen Kunststoff-Spritzgießeinheit (Spritzgießeinheit), deren Plastifizierzylinder (15) rückseitig in einem Trägerblock (10) aufgenommen ist,
mit einer sich quer zur Spritzachse (s-s) der Spritzgießeinheit erstreckenden Führungsleiste (18), die eine Durchtrittsbohrung (18b) aufweist, welche mit einem Zuführkanal (11) einen Transportkanal zum Plastifizierzylinder (15) bildet,
mit einer auf der Führungsleiste (18) motorisch verfahrbaren Verschiebeplatte (17), die mit über Schieber (22) absperrbaren Anschlußbohrungen (17c,17c′,17c'') versehen ist, an welchen je ein Zuführschlauch (21) zur wahlweisen Versorgung des Plastifizierzylinders (15) mit unterschiedlichen Kunststoffen angeschlossen ist, der aus Vorratsbehältern speisbar ist,
mit einer Antriebseinrichtung zum derartigen wahlweisen Verschieben der Verschiebeplatte (17) in Verschiebeschritten, daß sich diejenige Anschlußbohrung (17c,17c′,17c'') der Verschiebeplatte (17) mit der Durchtrittsbohrung (18b) der Führungsleiste (18) deckt, an welcher der Zuführschlauch (aktueller Zuführschlauch 21) für den jeweils zu verarbeitenden Kunststoff angeschlossen ist,
dadurch gekennzeichnet, daß die Antriebseinrichtung wenigstens zwei parallel zu ihrer Verschieberichtung angeordnete Kolben-Zylinder-Einheiten (Antriebszylinder H, H′) gleicher Hublänge umfaßt, von welchen einer (stationärer Antriebszylinder H′) axial an der Spritzgießeinheit abgestützt ist und der andere (H) einenends am beweglichen Teil (30′) des stationären Antriebszylinders (H′) und anderenends an der Verschiebeplatte (17) befestigt ist, und daß der eine Zylinder ausgefahren und der andere Zylinder nicht ausgefahren ist, wenn sich eine mittlere Anschlußbohrung (17c) der Verschiebeplatte (17) mit der Durchtrittsbohrung (18b) der Führungsleiste (18) deckt.

2. Wechseleinrichtung nach Patentanspruch 1, dadurch gekennzeichnet, daß die Kolbenstangen (30, 30′) beider Antriebszylinder (H, H′) miteinander fest verbunden sind und daß der eigentliche Zylinder (24a) des einen Antriebszylinders (H′) am Trägerblock (10) axial abgestützt ist und der eigentliche Zylinder (17a) des Hydraulikzylinders (H) mit der Verschiebeplatte verbunden ist.

3. Wechseleinrichtung nach Patentanspruch 1 oder 2, dadurch gekennzeichnet, daß die beiden Hydraulikzylinder (H, H′) miteinander identisch sind und ihre miteinander verbundenen Kolbenstangen (30, 30′) koaxial zueinander sind.

4. Wechseleinrichtung nach einem der vorhergehenden Patentansprüche, dadurch gekennzeichnet, daß sie auf dem Trägerblock (10) angeordnet ist und die Führungsleiste (18) eine über dem Plastifizierzylinder (15) liegende Durchtrittsbohrung (18 b) aufweist, welche mit einem Zuführkanal (11) im Trägerblock (10) den Transportkanal zum Plastifizierzylinder (15) bildet.

5. Wechseleinrichtung nach einem der vorhergehenden Patenansprüche, dadurch gekennzeichnet, daß eine einzige Kolben-Zylinder-Einheit (Steuerzylinder 27) zur Steuerung der Schieber (22) vorgesehen ist, die etwa symmetrisch zur Spritzachse (s-s) liegt und daß jeweils nur derjenige Schieber (aktueller Schieber 22) durch die Kolben-Zylinder-Einheit (27) aus seiner Abdeckposition herausziehbar ist, dessen abgesperrte Anschlußbohrung (17c, 17c′, 17c'') sich mit der Durchtrittsbohrung (18b) deckt.

6. Wechseleinrichtung nach Patentanspruch 5, dadurch gekennzeichnet, daß die jeweilige Position des aktuellen Schiebers (22) mittels stationärer induktiver Endschalter (28a, 28b) erfaßbar ist, durch welche die Antriebszylinder (H, H′) bei unvollständiger Absperrposition oder bei Offenstellung des aktuellen Schiebers (22) inaktiviert sind.

7. Wechseleinrichtung nach den Patentansprüchen 5 oder 6, dadurch gekennzeichnet, daß der in Offenstellung befindliche aktuelle Schieber (22) mittels einer Mitnahmenase (22a) mit der Kolbenstange (27a) des Steuerzylinders (27) durch Hintergriff gekuppelt ist, welche Mitnahmenase (22a) bei in Absperrposition befindlichem nicht aktuellem Schieber (22) sich also nach Verschieben der Verschiebeplatte (17) im Eingriff mit einer Sicherungsnut (18a) befindet, indem sie aus dem Bereich eines in der Achse des Steuerzylinders (27) in der Führungsleiste (18) eingebrachten Ausschnittes (18c) in die Sicherungsnut (18a) überführbar ist.

8. Wechseleinrichtung nach einem der vorhergehenden Patentansprüche, dadurch gekennzeichnet, daß ihr Grundkörper (24) über einen Zwischenflansch (25) lösbar mit einer Ausformung (10a) des Trägerblocks (10) verbunden ist.

9. Wechseleinrichtung nach einem der vorhergehenden Patentansprüche, dadurch gekennzeichnet, daß der eigentliche Zylinder (24a) des stationären Antriebszylinders (H′) eine Ausformung des durch ein Gußstück gebildeten Grundkörpers ist und daß der eigentliche Zylinder (17a) des beweglichen Antriebszylinders (H) eine Ausformung der durch ein Gußstück gebildeten Verschiebeplatte ist.

## Claims

1. Plastics material changing apparatus (changing device) for a horizontal plastics material injection moulding unit (injection moulding unit), the plasticizing cylinder (15) of which is accommodated at its rear end in a carrier block (10), including a guide bar (18), which extends transversely relative to the injection axis (s-s) of the injection moulding unit and has a through-bore (18b) which, together with a feed passage (11), forms a conveyor passage leading to the plasticizing cylinder (15), a traversing plate (17), which is kinetically displaceable along the guide bar (18) and is provided with connecting bores (17c, 17c', 17c''), which are closable by means of slide gates (22) and to which is connected a respective feed hose (21) for selectively supplying the plasticizing cylinder (15) with different plastics materials, said hose being feedable from storage containers, a driving device for such selective displacement of the traversing plate (17) in displacement steps that the connecting bore (17c, 17c', 17c'') of the traversing plate (17) corresponds with the through-bore (18b) of the guide bar (18), to which is connected the feed hose (active feed hose 21) for the particular plastics material to be processed, characterised in that the driving device includes at least two piston-cylinder units (driving cylinders H, H'), which are disposed parallel to their direction of displacement and have identical stroke lengths, one of said cylinders (stationary driving cylinder H') being axially supported on the injection moulding unit, and the other cylinder (H) having one end mounted on the displaceable member (30') of the stationary driving cylinder (H') and the other end mounted on the traversing plate (17), and in that one cylinder is extended and the other cylinder is not extended when a central connecting bore (17c) of the traversing plate (17) corresponds with the through-bore (18b) of the guide bar (18).

2. Changing device according to claim 1, characterised in that the piston rods (30, 30') of both driving cylinders (H, H') are securedly interconnected, and in that the actual cylinder (24a) of one driving cylinder (H') is axially supported on the carrier block (10), and the actual cylinder (17a) of the hydraulic cylinder (H) is connected to the traversing plate.

3. Changing device according to claim 1 or 2, characterised in that the two hydraulic cylinders (H, H') are identical to each other, and their interconnected piston rods (30, 30') are coaxial relative to each other.

4. Changing device according to one of the preceding claims, characterised in that it is disposed on the carrier block (10), and the guide bar (18) has a through-bore (18b), which lies over the plasticizing cylinder (15) and, together with a supply passage (11) in the carrier block (10), forms the conveyor passage leading to the plasticizing cylinder (15).

5. Changing device according to one of the preceding claims, characterised in that a single piston-cylinder unit (control cylinder 27) for controlling the gates (22) is provided, which lies substantially symmetrically relative to the injection axis (s-s), and in that only that gate (active gate 22) whose closed connecting bore (17c, 17c', 17c'') corresponds with the through-bore (18b) is extractable from its covering position by the piston-cylinder unit (27).

6. Changing device according to claim 5, characterised in that the respective position of the active gate (22) is determinable by means of stationary, inductive limit switches (28a, 28b), by which the driving cylinders (H, H') are inactivated when the active gate (22) is in its not fully closed position or is in its open position.

7. Changing device according to claims 5 or 6, characterised in that, in its open position, the active gate (22) is coupled to the piston rod (27a) of the control cylinder (27), by engaging therebehind, by means of a coupling nose (22a), which coupling nose (22a) is in engagement with a retaining groove (18a) when the inactive gate (22) is in its closed position, that is to say after displacement of the traversing plate (17), said nose being transferable into the retaining groove (18a) from the region of a recess (18c), which is provided in the guide bar (18) in the axis of the control cylinder (27).

8. Changing device according to one of the preceding claims, characterised in that its base member (24) is detachably connected to an extension (10a) of the carrier block (10) via an intermediate flange (25).

9. Changing device according to one of the preceding claims, characterised in that the actual cylinder (24a) of the stationary driving cylinder (H') is an extension of the base member formed by a moulding, and in that the actual cylinder (17a) of the displaceable driving cylinder (H) is an extension of the traversing plate formed by a moulding.

## Revendications

1. Dispositif de changement de matières plastiques (dispositif de changement) pour une unité horizontale d'injection de matières plastiques (unité d'injection) dont le cylindre de plastification (15) est logé, postérieurement, dans un bloc de support (10), comprenant
une réglette de guidage (18) s'étendant transversalement par rapport à l'axe d'injection (s-s) de l'unité d'injection, et percée d'un alésage de passage (18b) qui forme, avec un canal d'amenée (11) un canal de convoyage menant au cylindre de plastification (15),
un plateau coulissant (17) déplaçable par moteur sur la réglette de guidage (18) et muni de bouches de raccordement (17c, 17c', 17c'') qui peuvent être isolées par l'intermédiaire de vannes d'arrêt (22), et auxquelles un flexible respectif d'amenée (21) est raccordé pour alimenter sélectivement, par différentes matières plastiques, le cylindre de plastification (15) pouvant être alimenté à partir de cuves de réserve,
un mécanisme d'entraînement pour faire sélectivement coulisser le plateau coulissant (17), en mode pas à pas, de façon que vienne coïncider, avec l'alésage de passage (18b) de la réglette de guidage (18), celle des bouches de raccordement (17c, 17c', 17c'') dudit plateau coulissant (17) à laquelle est raccordé le flexible (flexible d'amenée 21 considéré) d'amenée de la matière plastique devant être respectivement traitée,
caractérisé par le fait que le mécanisme d'entraînement comprend au moins deux vérins (vérins d'entraînement H, H') de même longueur de course, disposés parallèlement à leur direction de coulissement, dont l'un (vérin fixe d'entraînement H') prend axialement appui sur l'unité d'injection, et l'autre vérin (H) est fixé, par une extrémité, à la partie mobile (30') du vérin fixe d'entraînement (H'), et au plateau coulissant (17) par son autre extrémité ; et par le fait que les tiges de l'un des vérins et de l'autre vérin sont, respectivement, déployée et non déployée lorsqu'une bouche centrale de raccordement (17c) du plateau coulissant (17) coïncide avec l'alésage de passage (18b) de la réglette de guidage (18).

2. Dispositif de changement selon la revendication 1, caractérisé par le fait que les tiges (30, 30') des pistons des deux vérins d'entraînement (H, H') sont reliées rigidement l'une à l'autre ; et par le fait que le cylindre (24a) proprement dit de l'un (H') des vérins d'entraînement prend axialement appui sur le bloc de support (10), et le cylindre (17a) proprement dit du vérin hydraulique (H) est relié au plateau coulissant.

3. Dispositif de changement selon la revendication 1 ou 2, caractérisé par le fait que les deux vérins hydrauliques (H, H') sont mutuellement identiques et leurs tiges (30, 30') de pistons, reliées l'une à l'autre, sont mutuellement coaxiales.

4. Dispositif de changement selon l'une des revendications précédentes, caractérisé par le fait qu'il est installé sur le bloc de support (10), et la réglette de guidage (18) présente un alésage de passage (18b) qui est situé au-dessus du cylindre de plastification (15) et forme, avec un canal d'amenée (11) pratiqué dans ledit bloc de support (10), le canal de convoyage menant audit cylindre de plastification (15).

5. Dispositif de changement selon l'une des revendications précédentes, caractérisé par la présence d'un seul et unique vérin (vérin de commande 27) prévu pour commander les vannes d'arrêt (22), et disposé à peu prés symétriquement par rapport à l'axe d'injection (s-s) ; et par le fait que, par l'intermédiaire du vérin (27), seule peut être respectivement déplacée, à l'écart de sa position de recouvrement, la vanne d'arrêt (vanne d'arrêt 22 considérée) dont la bouche de raccordement (17c, 17c', 17c'') isolée coïncide avec l'alésage de passage (18b).

6. Dispositif de changement selon la revendication 5, caractérisé par le fait que la position respective de la vanne d'arrêt considérée (22) peut être détectée au moyen d'interrupteurs fixes (28a, 28b) de fin de course, agissant par induction et ayant pour effet de neutraliser les vérins d'entraînement (H, H') lorsque la vanne d'arrêt considérée (22) occupe une position d'isolement incomplète ou une position d'ouverture.

7. Dispositif de changement selon les revendications 5 ou 6, caractérisé par le fait que la vanne d'arrêt considérée (22) occupant une position d'ouverture est accouplée par venue en prise par-derrière, au moyen d'un taquet d'entraînement (22a), à la tige (27a) du piston du vérin de commande (27), lequel taquet d'entraînement (22a), lorsqu'une vanne d'arrêt (22) autre que la vanne considérée occupe une position d'isolement, c'est-à-dire après le coulissement du plateau coulissant (17), est en prise avec une saignée d'arrêt (18a) étant donné qu'il peut être transféré, dans la saignée d'arrêt (18a), à partir de la région d'une dépouille (18c) pratiquée, dans la réglette de guidage (18), dans l'axe du vérin de commande (27).

8. Dispositif de changement selon l'une des revendications précédentes, caractérisé par le fait que son corps de base (24) est relié de manière libérable, au moyen d'une bride intermédiaire (25), à un bosselage (10a) du bloc de support (10).

9. Dispositif de changement selon l'une des revendications précédentes, caractérisé par le fait que le cylindre (24a) proprement dit du vérin fixe d'entraînement (H') est une protubérance du corps de base constitué par une pièce venue de fonderie ; et par le fait que le cylindre (17a) proprement dit du vérin mobile d'entraînement (H) est une protubérance du plateau coulissant constitué par une pièce venue de fonderie.
